# EUROPÄISCHE PATENTANMELDUNG

(11) **EP 0 900 685 A1**
(43) Veröffentlichungstag der Anmeldung: **10.03.1999**
(21) Anmeldenummer: 97115158.4
(22) Anmeldetag: 02.09.1997
(51) Int. Cl.: B60K 35/00, G01D 7/00

(54) **Animierte Bedienoberfläche für Kraftfahrzeuge**

(71) Anmelder: Angelé, Georg, 76227 Karlsruhe (DE)
(72) Erfinder: Angelé, Georg, 76227 Karlsruhe (DE)

(57) **Zusammenfassung**

Die Erfindung beschreibt eine neuartige Schnittstelle zwischen Fahrzeugnutzer und Kraftfahrzeug, die auch als zusätzliche Ebene zwischen einer klassischen Bedienoberfläche und dem Benutzer zwischengeschoben werden kann. Die Erfindung bildet die Grundlage für eine neue Generation von Kraftfahrzeugen, die mit ihrem Nutzer auf nahezu natürliche Weise kommunizieren. Hierzu werden technische Daten in Verhaltensmuster biologischer Systeme abgebildet. Fahrzeuge mit einer Bedienoberfläche in erfindungsgemäßer Ausprägung erhöhen die Akzeptanz des technischen Systems Kraftfahrzeug durch den Benutzer. Gleichzeitig kann durch entsprechende Ausführung der Bedienoberfläche auch der Freizeitwert eines Fahrzeugs erheblich gesteigert sowie eine größere Differenzierung der jeweiligen Marken erzielt werden.

## Beschreibung

Die Erfindung betrifft eine Anordnung gemäß dem Oberbegriff des Anspruchs 1. Eine derartige Anordnung dient als Schnittstelle zwischen einem Kraftfahrzeug und dessen Benutzer. Das Kraftfahrzeug ist ein technischer Gebrauchsgegenstand, der viele Benutzer oft täglich auf dem Weg zur Arbeit und häufig auch in der Freizeit begleitet, teilweise sogar einen wesentlichen Bestandteil sowohl des Arbeitslebens als auch der Freizeitgestaltung darstellt. Dies bringt es mit sich, daß viele Menschen zu ihrem Fahrzeug ein emotionales Verhältnis entwickeln.

Fahrzeuge herkömmlicher Ausprägung begegnen der Emotionalität ihrer Benutzer mit kalter rationaler Technik. Derartige Mensch-Maschine Schnittstellen vermitteln dem Benutzer Informationen über den Betriebszustand oder notwendige Wartungsarbeiten über einfache technische Anzeigesysteme wie Kontrolleuchten, analoge oder digitale Anzeigeinstrumente oder Textanzeigen. Diese Anzeigesysteme vermitteln nüchterne Information, häufig sogar unter Verwendung einer abstrakten Symbolik, die dem technisch weniger vorgebildeten Benutzer oft unverständlich bleibt.

Dem nicht so nüchtern rational eingestelltem Benutzer entspricht dagegen eher ein Fahrzeug, das auf seine Emotionen reagiert und auch eigene Emotionalität zum Ausdruck bringt. Eine solche Schnittstelle zwischen Mensch und Maschine zu schaffen, die das technische System Kraftfahrzeug dem Benutzer gegenüber in ähnlicher Weise agieren läßt wie ein biologisches System und damit eine Entsprechung zu seinen dem Fahrzeug gegenüber entwickelten Emotionen bildet ist Gegenstand der hier beschriebenen Anordnung.

Eine solche Bedienoberfläche in der Ausprägung eines virtuellen Lebewesens ist gerade in Verbindung mit dem Trend in der Fahrzeugnutzung vom reinen Fortbewegungsmittel zum Freizeitfahrzeug bzw. 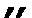 FUN-CAR" eine wesentliche Komponente, um das Verständnis der Benutzer für das System Fahrzeug und dessen Akzeptanz zu verbessern. Ziel dieser Erfindung ist es nicht, herkömmliche Anzeige- und Bediensysteme zu ersetzen, sondern diese zu ergänzen. Art und Ausprägung dieser Bedienoberfläche wird den Herstellern von Kraftfahrzeugen völlig neue Freiräume für die Darstellung und Interpretation ihrer Marke eröffnen und damit neue Abgrenzungsmöglichkeiten bei ansonsten immer ähnlicher werdender Technik gegenüber dem Wettbewerb bieten.

Der Erfindung liegt die Aufgabe zugrunde, technische Sachverhalte in biologische menschliche Kategorien zu übersetzen. Dabei werden scharfe technische Daten in unscharfe Kategorien menschlicher Begrifflichkeit transformiert. Dies soll an Beispielen erläutert werden:
1.Ein niedriger Motorölstand läßt sich übersetzen als ein leichtes Unwohlsein oder Fieber. Eine Ölunterfüllung dagegen ist gleichzusetzen mit einer ernsthaften Erkrankung mit hohem Fieber, die einen sofortigen Arztbesuch erforderlich macht.
2.Ein zu 20% gefüllter Tank kann als Hunger interpretiert werden, bei einem Tankfüllstand unter der Reservegrenze ist dagegen eine beginnende Unterernährung zu signalisieren.
3.Eine gute Pflege und schonende Fahrweise werden durch ein Bonus-Malus-System bewertet, dessen Zustand dem Benutzer entweder als Zustand des Glücks und der Zufriedenheit vermittelt werden, oder aber bei schlechter Pflege und unzureichender Wartung das System unzufrieden oder griesgrämig reagieren läßt.

Die Umsetzung von Fahrzeugdaten erfolgt bei einer erfindungsgemäßen Anordnung über ein Verhaltensmodell. Welche Faktoren in diese Modellbildung eingehen und welche Verhaltensweisen und Emotionen das Modell daraus entwickelt, ist in die Entscheidung des jeweiligen Anwenders der Erfindung gestellt und nicht Gegenstand der Erfindung.

Eine erfindungsgemäße Ausführung der Anordnung erfolgt zweckmäßig in zwei Komponenten, einer Bedieneinheit und dem Verhaltensmodell (Bild).

Eine erfindungsgemäße Anordnung nach Anspruch 7, realisiert die Interaktion zwischen Benutzer und System vorwiegend über eine Bedieneinheit. Die Bedieneinheit besitzt eine Anzeigeeinheit und optional Tasten für die Bestätigung von Informationen beziehungesweise die Befriedigung von Wünschen des Systems sowie optional elektro-akustische Wandler. Auf der Anzeigeeinheit, die vorzugsweise als graphisches Display ausgeführt wird, wird die Befindlichkeit des Modells, welches unter Einbeziehung fahrzeugspezifischer Daten gebildet wird, graphisch und/oder textuell dargestellt.

Die Bedieneinheit kann als separate Einheit fest montiert im Fahrzeug oder als mobile Einheit realisiert sein. Die Bedieneinheit kann sowohl im zentralen Instrument als auch im Bereich der Konsole untergebracht sein. Eine ebenfalls erfindungsgemäße Ausführung nach Anspruch 7 ist die Integration der Bedieneinheit in andere Fahrzeugkomponenten wie beispielsweise das Kombiinstrument, audiovisuelle Entertainmentsysteme oder Funkschlüssel.

Eine Ausprägung der erfindungsgemäßen Anordnung kann nach Anspruch 8 auch unter Verwendung eines Sprachsubsystems mit dem Benutzer über Sprache kommunizieren. Diese Kommunikation ist sowohl unidirektional als Sprachausgabe oder biderektional mit Spracherkennung darstellbar.

Die bevorzugte erfindungsgemäße Ausprägung der beschriebenen Anordnung ist nach Anspruch 7 die Bedieneinheit in einem elektronischen Funkschlüssel mit bidirektionaler Funkstrecke zu integrieren, so daß der Benutzer auch mit seinem Fahrzeug kommunizieren kann, wenn das Fahrzeug abgestellt ist.

Eine Anordnung nach Anspruch 1 und 2 ist weiter dadurch gekennzeichnet, das ein Verhaltensmodell gebildet wird. Das Verhaltensmodell realisiert die Erfassung aller relevanten Daten und Eingaben, transformiert diese in biologische Kategorien und steuert die Anzeige in der Bedieneinheit sowie optional Aktoren im Fahrzeug an. Das Modell kann als Software auf einem bereits im Fahrzeug vorhandenen Steuergerät oder Rechnersystem implementiert sein oder auf einem optionalen zusätzlichen Steuergerät sowohl in analoger als auch digitaler Realisierung. Die digitale Realisierung kann sowohl durch die entsprechende hardwaremäßige Verschaltung digitaler Schaltkreise als auch als Software auf sequentiellen speicherprogrammierten Schaltwerken oder Prozessoren erfolgen.

Um das Benutzerverhalten zu bewerten, empfängt das Modell alle relevanten Fahrzeugdaten von der entsprechenden Sensorik. Sowohl für die Schnittstelle zur Sensorik als auch zu den Aktoren kommen neben diskreten Leitungen vorzugsweise Fahrzeugbussysteme zum Einsatz.

Eine weitere erfindungsgemäße Ausprägung nach Anspruch 4 besteht darin, daß das Verhaltensmodell dieses Systems nicht an die reine Fahrzeugtechnik zweckgebunden sein muß, sondern das durch ein weitergehendes Verhaltensrepertoir, das der Befriedigung von Kommunikationswünschen dient und einem spielerischen Umgang seines Benutzers mit dem System entgegenkommt, weitere nicht fahrzeugspezifische 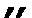 Lebensäußerungen" des Systems ermöglicht werden.

Bei Fahrzeugen mit mehreren Schlüsseln, die von unterschiedlichen Fahrern benutzt werden, kann die Anordnung nach Anspruch 5 für jeden Benutzer ein eigenes benutzerspezifisches Verhaltensmuster entwickeln.

Eine weitere erfindungsgemäße Ausprägung nach Anspruch 6 besteht darin, daß das System über verschiedene Verhaltensmodell verfügen kann, von denen der Benutzer eines seiner Wahl aktivieren kann (z.B. unterschiedliche Persönlichkeiten).

Die beschriebene Anordnung ist auf bestehende Fahrzeugstrukturen aufsetzbar und kann vom Fahrzeughersteller auch als Sonderausstattung angeboten werden. Eine erfindungsgemäße Anordnung nach Anspruch 9 läßt sich insbesondere leicht als Option auf klassische Fahrzeugkonzepte aufsetzen, wenn das Fahrzeug über eine moderne auf Bussystemen basierende Bordverkabelung besitzt und alle relevanten Informationen durch das Abhören dieser Bussysteme vom Verhaltensmodell erlangt werden können.

Nach Anspruch 3 kann die beschriebene Anordnung auch auf Stellglieder innerhalb des Fahrzeugs wie etwa Scheinwerfer oder Horn zugreifen, um fahrzeugspezifische 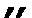 Lebensäußerungen" zu signalisieren.

Zusätzliche Alternativen und Weiterbildungen sowie weitere Merkmale und Vorteile der Erfindung ergeben sich aus den weiteren Ansprüchen.

## Patentansprüche

1. Anordnung zur Erfassung und Bewertung von Wartungs, Pflege, Diagnose und Fahrweise relevanter Daten in Kraftfahrzeugen und deren Darstellung über eine **animierte Bedienoberfläche**, die das Verhalten eines biologischen Systems nachbildet.

2. Anordnung nach Anspruch 1 dadurch gekennzeichnet, daß die erfaßten Daten in ein dem Fahrzeug adäquates biologisches Verhaltensmodell transformiert werden. Das Modell kann vorteilhaft als ein System mit Gedächtnis realisiert sein, daß bei unterschiedlicher Vorgeschichte unterschiedliche Verhaltensweisen entwickeln kann.

3. Anordnung nach Anspruch 1 und 2 dadurch gekennzeichnet, daß die Nachbildung der Verhaltensweisen biologischer Systeme einschließlich von Emotionen in der Interaktion mit dem Benutzer auch mit Zugriff auf Aktoren im Fahrzeug erfolgen kann.

4. Anordnung nach Anspruch 1, 2 und 3 dadurch gekennzeichnet, daß bei der Modellbildung auch eigenständige übliche Verhaltensweisen biologischer Systeme modelliert werden können, die nicht zwingend fahrzeugrelevant sind.

5. Anordnung nach einem vorangehenden Anspruch dadurch gekennzeichnet, daß die Bildung des Verhaltensmusters auch fahrerspezifisch erfolgen kann, sofern das Fahrzeug eine Identifikation unterschiedlicher Fahrer zuläßt.

6. Anordnung nach einem vorangehenden Anspruch dadurch gekennzeichnet, daß mehrere verschiedene Verhaltensmodelle abgelegt sein können und vom Benutzer je nach Wunsch aktiviert werden können.

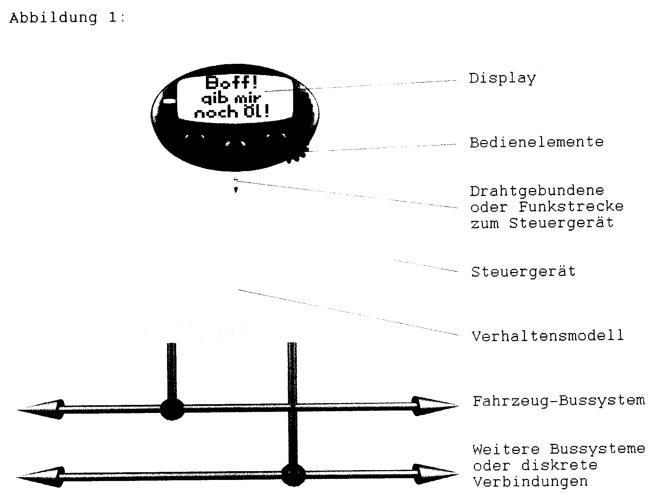

7. Anordnung nach einem vorangehenden Anspruch, dadurch gekennzeichnet, daß die Interaktion mit dem Fahrzeugbenutzer über eine entweder im Fahrzeug fest installierte Bedieneinheit oder vorzugsweise über eine mobile mit dem Fahrzeug über Funkstrecke verbundene Bedieneinheit erfolgt. Eine ebenfalls erfindungsgemäße Realisierung der Bedieneinheit ist die Integration der Bedieneinheit in andere Fahrzeugkomponenten, vorzugsweise in einen Funkschlüssel (Bild 1).

8. Anordnung nach einem vorangehenden Anspruch, dadurch gekennzeichnet, daß die Interaktion mit dem Fahrzeugbenutzer auch mittels anderer im Fahrzeug vorhandener oder speziell verbauter Bedienelemente oder Aktoren einschließlich eines Sprach-Subsystems erfolgen kann.

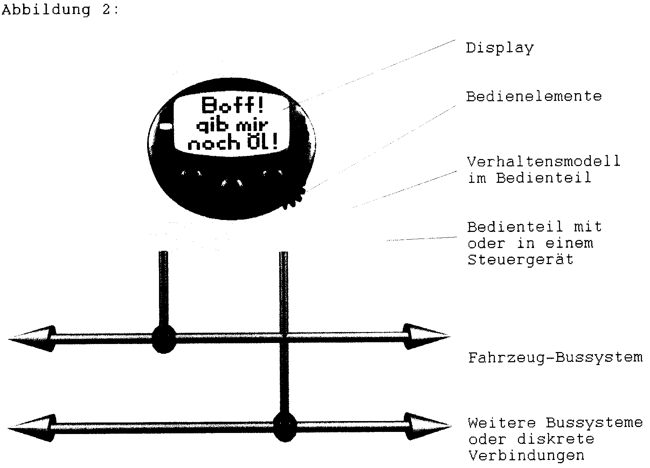

9. Anordnung nach vorangehenden Ansprüchen, dadurch gekennzeichnet, daß die Implementierung des Verhaltensmodells in Hard- oder Software erfolgen kann. Eine vorzugsweise erfindungsgemäße Ausführung ist die Implementierung in Software auf einem digitalen Mikrorechner (Steuergerät) im Fahrzeug. Das Verhaltensmodell kann mittels einer eigenständigen physischen Einheit, einem für andere Funktionen im Fahrzeug ohnehin vorhandene Steuereinheit oder als Teil der Bedieneinheit realisiert sein (Bild 1 und 2).
